# EUROPÄISCHE PATENTSCHRIFT

(11) **EP 3 740 385 B1**
(45) Veröffentlichungstag und Bekanntmachung des Hinweises auf die Patenterteilung: **07.02.2024**
(21) Anmeldenummer: 18825870.1
(22) Anmeldetag: 03.12.2018
(51) Int. Cl.: B60C 9/00, B60C 9/04, B60C 9/20

(54) **VERSTÄRKUNGSLAGE FÜR GEGENSTÄNDE AUS ELASTOMEREM MATERIAL UND FAHRZEUGLUFTREIFEN**
REINFORCING PLY FOR ARTICLES CONSISTING OF AN ELASTOMERIC MATERIAL, AND VEHICLE PNEUMATIC TYRES
NAPPE DE RENFORCEMENT POUR DES OBJETS COMPOSÉS D'UN MATÉRIAU ÉLASTOMÈRE ET PNEUMATIQUE DE VÉHICULE

(30) Priorität: 16.01.2018 DE 102018200631
(43) Veröffentlichungstag der Anmeldung: 25.11.2020
(73) Patentinhaber: Continental Reifen Deutschland GmbH, 30165 Hannover (DE)
(72) Erfinder: KRAMER, Thomas, 30419 Hannover (DE); KRÜGER, Jörn, 30419 Hannover (DE); JUSTINE, Carole, 30419 Hannover (DE); WAHL, Günter, 30419 Hannover (DE)
(74) Vertreter: Continental Corporation
(86) Internationale Anmeldenummer: PCT/EP2018/083257
(87) Internationale Veröffentlichungsnummer: WO 2019/141424

(56) Entgegenhaltungen:
- EP-A1- 2 759 624
- EP-B1- 0 908 329
- WO-A1-2011/082845
- WO-A1-2014/118082
- DE-A1- 3 124 119
- DE-A1-102010 060 115
- DE-A1-102013 106 778
- DE-T2- 69 921 006
- DE-T2- 69 921 006
- US-A1- 2013 206 302
- US-B1- 6 244 315

## Beschreibung

Die Erfindung betrifft einen Fahrzeuglufreifen mit einer gummierte Verstärkungslage und einer Gürtellage aus gummierten Festigkeitsträgern, wobei die Verstärkungslage eine Vielzahl an parallelen und beabstandet zueinander angeordneten textilen Festigkeitsträgern aufweist, wobei jeder textile Festigkeitsträger aus wenigstens einem verdrehten Multifilamentgarn aus dem Material Viskose besteht.

Verstärkungslagen für Gegenstände aus elastomerem Material wie beispielsweise technische Gummiprodukte und Fahrzeug(luft)reifen haben größte Bedeutung und sind dem Fachmann im Allgemeinen bekannt. Die Verstärkungslagen weisen eine Vielzahl an verstärkenden, fadenförmigen Elementen, den sogenannten Festigkeitsträgern, auf. Diese sind vollständig in elastomerem Material eingebettet. Die Festigkeitsträger dieser Verstärkungslagen weisen beispielsweise die Form von Geweben oder kalandrierten, endlos gespulten Festigkeitsträgern auf.

Die gummierten Verstärkungslagen geeigneter Größe und Ausbildung werden mit weiteren Bauteilen zusammengefügt, um ein technisches Gummiprodukt oder einen Fahrzeugluftreifen zu bilden. Dabei verstärken die gummierten Verstärkungslagen das betreffende Produkt.

Aus der EP 0 908 329 B1 ist eine Verstärkungslage mit Textil-Korden aus Multifilamentgarnen aus PET, PEN und Aramid bekannt geworden. Die PEN-Korde sind aufgrund des verwendeten Garntiters und ihrer Konstruktion vergleichsweise dünn ausgelegt, so dass die gummierte Verstärkungslage eine vergleichsweise geringe Lagendicke aufweist. Dieses hat einerseits den Vorteil, dass weniger Kautschukmaterial zum Gummieren dieser Festigkeitsträger eingesetzt werden muss, wodurch Materialkosten eingespart werden. Andererseits hat eine dünne gummierte Verstärkungslage im Produkt, beispielsweise im Fahrzeugreifen, den Vorteil, dass das Gewicht des Reifens verringert ist sowie eine geringere Hysterese bewirkt, was sich positiv auf den Rollwiderstand des Reifens auswirkt.

Aus der WO 2014118082 A1 ist ein Festigkeitsträger für elastomere Produkte aus einem oder mehreren umweltfreundlichen Viskose-Multifilamentgarn(en) bekannt, welche einen vergleichsweise geringen Durchmesser, einen Kristallinitätsgrad im Bereich von 15% bis 40% und eine Zugfestigkeit im Bereich von ≥ 45 cN/tex bis ≤ 55 cN/tex aufweisen.

Jedoch ist neben der Gewichtsverringerung und der geringeren Hysterese durch eine dünne Lagendicke ebenfalls die Festigkeit dieser Verstärkungslage wesentlich, um die im Reifen auftretenden Kräfte hinreichend aufnehmen zu können.

Es ist daher die Aufgabe der Erfindung, einen Fahrzeugluftreifen mit einer Verstärkungslage bereitzustellen, welche vergleichsweise dünn gestaltet ist und welche jedoch eine ausreichende Festigkeit für die im Reifen auftretenden Kräfte aufweist. Weiterhin ist es die Aufgabe der Erfindung, einen Fahrzeugluftreifen bereitzustellen, welcher bei guter struktureller Haltbarkeit rollwiderstandsoptimiert ist.

Die Aufgabe wird durch einen entsprechend Anspruch 1 ausgeführten Fahrzeugluftreifen gelöst.

Dabei genügt die Verstärkungslage des erfindungsgemäßen Fahrzeugluftreifens folgender Bedingung:
(D² / E₀) in mm entspricht einem Wert in einem Bereich von 0,30 mm bis 0,45 mm, und dass die Verstärkungslage eine Festigkeit 11 kN/dm < x < 20 kN/dm aufweist, wobei D der Durchmesser des textilen Festigkeitsträgers in mm und in einem Bereich von 0,38 mm bis 0,48 mm liegt und wobei E₀ = 100/epdm ist.

Es ist eine Verstärkungslage geschaffen, welche Festigkeitsträger mit vergleichsweise geringen Durchmessern aufweist. Die Durchmesser der Festigkeitsträger sind derart mit der Dichte ihrer Anordnung in der Verstärkungslage und deren Festigkeit kombiniert, dass eine optimierte Festigkeit der Verstärkungslage erhalten ist. Die Gummierung der Verstärkungslage, insbesondere deren Dicke, ist in einer für den Fachmann üblichen Weise ausgeführt, wodurch eine vergleichsweise dünne Verstärkungslage zur Verfügung gestellt ist. Diese Verstärkungslage weist eine Festigkeit 11 kN/dm < x < 20 kN/dm auf, welches eine ausreichende Festigkeit für Verstärkungslagen mit textilen Festigkeitsträgern insbesondere für PKW-Reifen ist.

"epdm" bedeutet ends per decimeter und beschreibt die Festigkeitsträgerdichte in der Verstärkungslage.

Der Ausdruck "Festigkeit der Verstärkungslage" meint die Bruchkraft der Verstärkungslage in kN pro dm (Dezimeter), welche sich aus der Bruchkraft des einzelnen Festigkeitsträgers multipliziert mit der Anzahl der Festigkeitsträger pro dm dieser Verstärkungslage errechnet, wobei die Bruchkraft nach ASTM D885M ermittelt wird.

Vorteilhaft ist es, wenn der Festigkeitsträger ein aus zwei miteinander verdrehten Viskose-Multifilamentgarnen bestehender Kord ist und wenn die Festigkeitsträger in einer Dichte in einem Bereich von 150 epdm bis 220 epdm, vorzugsweise in einem Bereich von 170 epdm bis 195 epdm in dieser Verstärkungslage angeordnet sind. Die vorgenannte Dichte ist ein optimierter Kompromiss zwischen Haltbarkeit der Verstärkungslage und Kraftübertragung, für die ein bestimmtes Gummivolumen zwischen den Festigkeitsträgern vorhanden sein muss, auf der einen Seite sowie der Festigkeit und der Reifenperformance Haltbarkeit auf der anderen Seite, für die die Festigkeitsträger nicht zu weit in der Verstärkungslage auseinander liegen dürfen.

Zweckmäßig ist es, wenn das Viskose-Multifilamentgarn einen Kristallinitätsgrad im Bereich von 15% bis 40%, vorzugsweise im Bereich von 20% bis 35%, besonders bevorzugt im Bereich von 24% bis 30% und nach Konditionierung im Normklima gemäß DIN EN ISO 139-1:2005 einen Garntiter im Bereich von ≥ 150 dtex bis < 1100 dtex, bevorzugt im Bereich von ≥ 200 dtex bis ≤ 840 dtex, besonders bevorzugt im Bereich von ≥ 200 dtex bis ≤ 820 dtex.

Die Herstellung, Eigenschaften, Konstruktionen sowie die Vorteile einer Verstärkungslage mit umweltfreundlich gestalteten und behandelten Festigkeitsträgern mit wenigstens einem derartigen Viskose-Multifilamentgarn sowie Fahrzeugluftreifen mit einer vorgenannten Verstärkungslage sind in der WO 2014118082 A1 insbesondere in den Seiten 4, Zeile 28 bis Seite 15, Zeile 25 beschrieben.

In einer bestimmten Ausführung der Erfindung genügt die Verstärkungslage folgender Bedingung:
(D² / E₀) in mm entspricht einem Wert in einem Bereich von 0,37 mm bis 0,45 mm und die Verstärkungslage weist eine Festigkeit 16 kN/dm < x < 19 kN/dm auf, wobei D der Durchmesser des textilen Festigkeitsträgers in mm und in einem Bereich von 0,43 mm bis 0,48 mm, bevorzugt in einem Bereich von 0,45 mm bis 0,46 mm liegt und wobei E₀ = 100/epdm ist.

Eine derartige Ausführung eines Textil-Kordes ist insbesondere für die Konstruktion 780 dtex x 2 zweckmäßig, wobei beide Garne aus dem Material Viskose bestehen. Es ist ein bestmöglicher Kompromiss aus benötigter Lagenfestigkeit und möglichst kleiner Lagenstärke erhalten.

In einer bestimmten alternativen Ausführung der Erfindung genügt die Verstärkungslage folgender Bedingung:
(D² / E₀) in mm entspricht einem Wert in einem Bereich von 0,35 mm bis 0,45 mm und und die Verstärkungslage weist eine Festigkeit 11 kN/dm < x < 14 kN/dm auf, wobei D der Durchmesser des textilen Festigkeitsträgers in mm und in einem Bereich von 0,40 mm bis 0,43 mm liegt und wobei E₀ = 100/epdm ist.

Eine derartige Ausführung eines Textil-Kordes ist insbesondere für die Konstruktion 620 dtex x 2 zweckmäßig, wobei beide Garne aus dem Material Viskose bestehen. Es ist ein alternativer Kompromiss aus benötigter Lagenfestigkeit und möglichst kleiner Lagenstärke im Vergleich zu dem vorgenannten Ausführungsbeispiel erhalten.

In einer Ausführung der Erfindung ist der Textil-Kord asymmetrisch und weist Multifilamentgarne unterschiedlichen Garn-Titers auf, wobei die Konstruktion vorzugsweise 620 dtex x 1 / 780 dtex x 1 [600 tpm / 550 tpm] ist und wobei der Kord gegensinnig zur Garndrehrichtung endverdreht ist.

In einer vorteilhaften Ausführung der Erfindung weist der Kord aus Viskose-Multifilamentgarnen die Konstruktion 620 dtex x2 mit einem Durchmesser von 0,42 mm auf, wobei der Kord in einer Dichte von 200 epdm in der Verstärkungslage angeordnet ist und wobei die Verstärkungslage eine Festigkeit von etwa 13,2 kN/dm aufweist.

In einer weiteren vorteilhaften Ausführung der Erfindung weist der Kord aus Viskose-Multifilamentgarnen die Konstruktion 780 dtex x 2 mit einem Durchmesser von 0,46 mm auf, wobei der Kord in einer Dichte von 175 epdm in der Verstärkungslage angeordnet ist und wobei die Verstärkungslage eine Festigkeit von etwa 16,1 kN/dm aufweist.

Die Verstärkungslage des Fahrzeugluftreifens ist eine Karkasse und/oder eine Gürtelbandage und/oder ein Wulstverstärker. Bevorzugt ist diese Verstärkungslage eine Karkasse eines PKW-Luftreifens.

Der erfindungsgemäße Fahrzeugluftreifen weist zusätzlich zur vorbeschriebenen Verstärkungslage, welche vorzugsweise eine Karkasse ist, eine Gürtellage aus gummierten Festigkeitsträgern auf, welche der nachfolgenden Bedingung genügt:
(D² / E₀) in mm entspricht einem Wert in einem Bereich von 0,07 mm bis 0,43 mm und die Verstärkungslage weist eine Festigkeit von 16,5 kN/dm <X< 55 kN/dm, bevorzugt von 22 kN/dm <X< 38 kN/dm auf, wobei D der Durchmesser des Festigkeitsträgers in mm ist und wobei E₀ = 100/epdm ist.

Hierbei ist die Summe der Festigkeiten aus der Verstärkungslage mit textilen Festigkeitsträgern und der Gürtellage ≥ 40 kN/dm. Es ist eine ausreichende Gesamtfestigkeit erhalten.

Vorzugsweise besteht der Festigkeitsträger der Gürtellage aus wenigstens einem Stahlfilament, welches einen Durchmesser in einem Bereich von 0,26 mm bis 0,35 mm aufweist. Diese dünnen Durchmesser sind vorteilhaft für einen optimierten Rollwiderstand.

In einer bevorzugten Ausführung der Erfindung weist der Festigkeitsträger die Konstruktion 1x0,30 mm oder 2x0,30 mm auf und ist in einer Dichte in einem Bereich von 80 bis 120 epdm in der Gürtellage angeordnet. Die vorgenannte Dichte ist ein optimierter Kompromiss zwischen Haltbarkeit der Verstärkungslage und Kraftübertragung, für die ein bestimmtes Gummivolumen zwischen den Festigkeitsträgern vorhanden sein muss, auf der einen Seite sowie der Festigkeit und der Reifenperformance Haltbarkeit auf der anderen Seite, für die die Festigkeitsträger nicht zu weit in der Verstärkungslage auseinander liegen dürfen.

Bevorzugt ist ein Stahlmonofilament der Konstruktion 1x0,30 mm mit einer Dichte von 110 epdm in der Gürtellage angeordnet, wobei diese Gütellage eine Festigkeit von etwa 24 kN/dm aufweist.

In einer anderen bevorzugten Ausführung ist ein Stahlkord der Konstruktion 2x0,30 mm mit einer Dichte von 80 epdm in der Gürtellage angeordnet ist, wobei diese Gütellage eine Festigkeit von etwa 35 kN/dm aufweist.

Die Erfindung wird nachfolgend anhand einer Figur, welche ein schematisches Ausführungsbeispiel der Erfindung darstellt, näher erläutert.

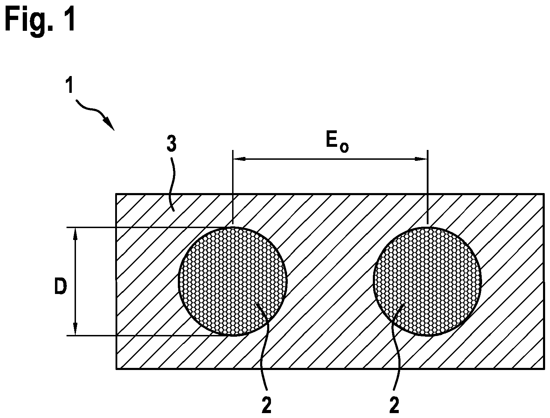

Die Fig. 1 zeigt einen Ausschnitt aus dem Querschnitt einer Verstärkungslage eines erfindungsgemäßen PKW-Fahrzeugluftreifens.

Die Verstärkungslage 1 ist eine Karkasslage. Die Verstärkungslage 1 weist eine Vielzahl an parallelen und beabstandet zueinander angeordneten textilen Festigkeitsträgern 2 auf, welche in eine Kautschukmatrix 3 eingebettet sind. Von den Festigkeitsträgern 2 sind in dem Ausschnitt der Fig. 1 zwei Festigkeitsträger 2 dargestellt. Jeder textile Festigkeitsträger 2 ist ein aus zwei miteinander verdrehten Multifilamentgarnen bestehender Kord 2 der Konstruktion 780 dtex x 2. Die Multifilamentgarne bestehen aus dem umweltfreundlich gestalteten und behandelten Material Viskose. Jedes Viskose-Multifilamentgarn weist einen Kristallinitätsgrad im Bereich von 20% bis 35%, vorzugsweise im Bereich von 24% bis 30% und nach Konditionierung im Normklima gemäß DIN EN ISO 139-1:2005 einen Garntiter im Bereich von ≥ 200 dtex bis ≤ 840 dtex, und eine Zugfestigkeit im Bereich von ≥ 45 cN/tex bis ≤ 55 cN/tex, bevorzugt im Bereich von ≥ 48 cN/tex bis ≤ 53 cN/tex auf. Somit sind zwei Viskose-Multifilamentgarne zu einem Kord 2 verdreht. Jedes Viskose-Multifilamentgarn ist mit einem Twist von 550 gleichsinnig verdreht, während die Endverdrehung ebenfalls mit einem Twist von 550, aber gegensinnig ist. Der Durchmesser des Kordes D beträgt 0,46 mm und der Kord 2 ist mit 175 epdm in der Verstärkungslage 1 angeordnet. (D² / E₀) in mm entspricht 0,37 mm. Die Verstärkungslage weist eine Festigkeit von 16,1 kN/dm auf.

### Bezugszeichenliste

- 1: Verstärkungslage
- 2: Textiler Festigkeitsträger / Kord
- 3: Kautschukmatrix
- D: Durchmesser des Kordes
- E₀: Entfernung zwischen den Mittelpunkten zweier benachbarter Korde im Querschnitt

## Patentansprüche

1. Fahrzeugluftreifen, welcher mindestens eine gummierte Verstärkungslage (1), die eine Karkasse und/oder eine Gürtelbandage und/oder ein Wulstverstärker ist, und eine Gürtellage aus gummierten Festigkeitsträgern aufweist, wobei die Verstärkungslage (1) eine Vielzahl an parallelen und beabstandet zueinander angeordneten textilen Festigkeitsträgern (2) aufweist, wobei jeder textile Festigkeitsträger (2) aus wenigstens einem verdrehten Multifilamentgarn aus dem Material Viskose besteht,
und die Verstärkungslage (1) folgender Bedingung genügt:
(D² / E₀) in mm entspricht einem Wert in einem Bereich von 0,30 mm bis 0,45 mm,
und dass die Verstärkungslage (1) eine Festigkeit 11 kN/dm < x < 20 kN/dm aufweist, wobei die Festigkeit der Verstärkungslage die Bruchkraft der Verstärkungslage in kN pro dm (Dezimeter) ist, welche sich aus der Bruchkraft der einzelnen Festigkeitsträger multipliziert mit der Anzahl Festigkeitsträger pro dm dieser Verstärkungslage errechnet, wobei die Bruchkraft nach ASTM D885M ermittelt wird,
wobei D der Durchmesser des textilen Festigkeitsträgers (2) in mm ist und in einem Bereich von 0,38 mm bis 0,48 mm liegt und
wobei E₀ = 100/epdm ist,
**dadurch gekennzeichnet, dass**
die Gürtellage der nachfolgenden Bedingung genügt:
(D² / E₀) in mm entspricht einem Wert in einem Bereich von 0,07 mm bis 0,43 mm und dass die Gürtellage eine Festigkeit von 16,5 kN/dm <X< 55 kN/dm aufweist, wobei D der Durchmesser des Festigkeitsträgers in mm ist und wobei E₀ = 100/epdm ist
und die Summe der Festigkeiten aus der Verstärkungslage (1) mit textilen Festigkeitsträgern und der Gürtellage ≥ 40 kN/dm ist.

2. Fahrzeugluftreifen nach Anspruch 1, **dadurch gekennzeichnet, dass** der Festigkeitsträger (2) der Verstärkungslage (1) ein aus zwei miteinander verdrehten Viskose-Multifilamentgarnen bestehender Kord (2) ist und dass die Festigkeitsträger (2) der Verstärkungslage (1) in einer Dichte in einem Bereich von 150 epdm bis 220 epdm, vorzugsweise in einem Bereich von 170 epdm bis 195 epdm in dieser Verstärkungslage (1) angeordnet sind.

3. Fahrzeugluftreifen nach einem oder mehreren der vorangehenden Ansprüche, **dadurch gekennzeichnet, dass** das Viskose-Multifilamentgarn der Verstärkungslage (1) einen Kristallinitätsgrad im Bereich von 15% bis 40%, vorzugsweise im Bereich von 20% bis 35%, besonders bevorzugt im Bereich von 24% bis 30% und nach Konditionierung im Normklima gemäß DIN EN ISO 139-1:2005 einen Garntiter im Bereich von ≥ 150 dtex bis < 1100 dtex, bevorzugt im Bereich von ≥ 200 dtex bis ≤ 840 dtex, besonders bevorzugt im Bereich von ≥ 200 dtex bis ≤ 820 dtex hat.

4. Fahrzeugluftreifen nach einem oder mehreren der vorangehenden Ansprüche, **dadurch gekennzeichnet, dass** die Verstärkungslage (1) folgender Bedingung genügt:
(D² / E₀) in mm entspricht einem Wert in einem Bereich von 0,37 mm bis 0,45 mm,
und dass die Verstärkungslage (1) eine Festigkeit 16 kN/dm < x < 19 kN/dmaufweist,
wobei D der Durchmesser des textilen Festigkeitsträgers (2) in mm und in einem Bereich von 0,43 mm bis 0,48 mm, bevorzugt in einem Bereich von 0,45 mm bis 0,46 mm liegt und
wobei E₀ = 100/epdm ist.

5. Fahrzeugluftreifen nach einem oder mehreren der vorangehenden Ansprüche, **dadurch gekennzeichnet, dass** die Verstärkungslage (1) folgender Bedingung genügt:
(D² / E₀) in mm entspricht einem Wert in einem Bereich von 0,35 mm bis 0,45 mm,
und dass die Verstärkungslage (1) eine Festigkeit 11 kN/dm < x < 14 kN/dm aufweist,
wobei D der Durchmesser des textilen Festigkeitsträgers (2) in mm und in einem Bereich von 0,40 mm bis 0,43 mm liegt und
wobei E₀ = 100/epdm ist.

6. Fahrzeugluftreifen nach Anspruch 4, **dadurch gekennzeichnet, dass** der Textil-Kord der Verstärkungslage (1) die Konstruktion 780 dtex x 2 aufweist, wobei beide Garne aus dem Material Viskose bestehen.

7. Fahrzeugluftreifen nach Anspruch 5, **dadurch gekennzeichnet, dass** der Textil-Kord der Verstärkungslage (1) die Konstruktion 620 dtex x 2 aufweist, wobei beide Garne aus dem Material Viskose bestehen.

8. Fahrzeugluftreifen nach einem oder mehreren der vorangehenden Ansprüche 1 bis 5, **dadurch gekennzeichnet, dass** der Textil-Kord der Verstärkungslage (1) asymmetrisch ist und Multifilamentgarne unterschiedlichen Garn-Titers aufweist und vorzugsweise die Konstruktion 620 dtex x 1 / 780 dtex x 1 [600 tpm / 550 tpm] aufweist, wobei der Kord gegensinnig zur Garndrehrichtung endverdreht ist.

9. Fahrzeugluftreifen gemäß Anspruch 7, **dadurch gekennzeichnet, dass** der Kord (2) der Verstärkungslage (1) die Konstruktion 620 dtex x2 mit einem Durchmesser (D) von 0,42 mm aufweist, wobei der Kord in einer Dichte von 200 epdm in dieser Verstärkungslage (1) angeordnet ist und dass die Verstärkungslage (1) eine Festigkeit von etwa 13,2 kN/dm aufweist.

10. Fahrzeugluftreifen gemäß Anspruch 6, **dadurch gekennzeichnet, dass** der Kord (2) der Verstärkungslage (1) die Konstruktion 780 dtex x 2 mit einem Durchmesser (D) von 0,46 mm aufweist, wobei der Kord in einer Dichte von 175 epdm in dieser Verstärkungslage (1) angeordnet ist und dass die Verstärkungslage (1) eine Festigkeit von etwa 16,1 kN/dm aufweist.

11. Fahrzeugluftreifen einem oder mehreren der vorangehenden Ansprüche, **dadurch gekennzeichnet, dass** der Festigkeitsträger der Gürtellage aus wenigstens einem Stahlfilament besteht, welches einen Durchmesser in einem Bereich von 0,26 mm bis 0,35 mm aufweist.

12. Fahrzeugluftreifen einem oder mehreren der vorangehenden Ansprüche, **dadurch gekennzeichnet, dass** der Festigkeitsträger der Gürtellage die Konstruktion 1x0,30 mm oder 2x0,30 mm aufweist und in einer Dichte in einem Bereich von 80 bis 120 epdm angeordnet ist, vorzugsweise der Festigkeitsträger der Konstruktion 1x0,30 mm in einer Dichte von 110 epdm in der Gürtellage angeordnet ist und dass deren Festigkeit etwa 24 kN/dm beträgt oder dass der Festigkeitsträger der Konstruktion 2x0,30 mm in einer Dichte von 80 epdm in der Gürtellage angeordnet ist und dass deren Festigkeit etwa 35 kN/dm beträgt.

## Claims

1. Vehicle pneumatic tyre which has at least one rubberized reinforcing ply (1), which is a carcass and/or a belt bandage and/or a bead reinforcer, and a belt ply composed of rubberized strengthening members, wherein the reinforcing ply (1) has a multiplicity of textile strengthening members (2) which are arranged parallel to and spaced apart from one another, wherein each textile strengthening member (2) is composed of at least one twisted multifilament yarn composed of the material viscose, and the reinforcing ply (1) satisfies the following condition:
(D² / E₀) in mm corresponds to a value in a range from 0.30 mm to 0.45 mm, and in that the reinforcing ply (1) has a strength of 11 kN/dm < x < 20 kN/dm, wherein the strength of the reinforcing ply is the breaking force of the reinforcing ply in kN per dm (decimetre), which is calculated from the breaking force of the individual strengthening members multiplied by the number of strengthening members per dm of this reinforcing ply, with the breaking force being determined in accordance with ASTM D885M,
where D is the diameter of the textile strengthening member (2) in mm and lies in a range from 0.38 mm to 0.48 mm, and
where E₀ = 100/epdm,
**characterized in that**
the belt ply satisfies the following condition:
(D² / E₀) in mm corresponds to a value in a range from 0.07 mm to 0.43 mm, and **in that** the belt ply has a strength of 16.5 kN/dm < X < 55 kN/dm, where D is the diameter of the strengthening member in mm, and where E₀ = 100/epdm,
and the sum of the strengths of the reinforcing ply (1) with textile strengthening members and of the belt ply is ≥ 40 kN/dm.

2. Vehicle pneumatic tyre according to Claim 1, **characterized in that** the strengthening member (2) of the reinforcing ply (1) is a cord (2) composed of two twisted-together viscose multifilament yarns, and **in that** the strengthening members (2) of the reinforcing ply (1) are arranged in this reinforcing ply (1) in a density in a range from 150 epdm to 220 epdm, preferably in a range from 170 epdm to 195 epdm.

3. Vehicle pneumatic tyre according to one or both of the preceding claims, **characterized in that** the viscose multifilament yarn of the reinforcing ply (1) has a degree of crystallinity in the range from 15% to 40%, preferably in the range from 20% to 35%, particularly preferably in the range from 24% to 30%, and, after conditioning in standard atmosphere in accordance with DIN EN ISO 139-1:2005, has a yarn linear density in the range from ≥ 150 dtex to < 1100 dtex, preferably in the range from ≥ 200 dtex to ≤ 840 dtex, particularly preferably in the range from ≥ 200 dtex to ≤ 820 dtex.

4. Vehicle pneumatic tyre according to one or more of the preceding claims, **characterized in that** the reinforcing ply (1) satisfies the following condition:
(D² / E₀) in mm corresponds to a value in a range from 0.37 mm to 0.45 mm, and **in that** the reinforcing ply (1) has a strength of 16 kN/dm < x < 19 kN/dm, where D is the diameter of the textile strengthening member (2) in mm and lies in a range from 0.43 mm to 0.48 mm, preferably in a range from 0.45 mm to 0.46 mm, and
where E₀ = 100/epdm.

5. Vehicle pneumatic tyre according to one or more of the preceding claims, **characterized in that** the reinforcing ply (1) satisfies the following condition:
(D² / E₀) in mm corresponds to a value in a range from 0.35 mm to 0.45 mm, and **in that** the reinforcing ply (1) has a strength of 11 kN/dm < x < 14 kN/dm, where D is the diameter of the textile strengthening member (2) in mm and lies in a range from 0.40 mm to 0.43 mm, and
where E₀ = 100/epdm.

6. Vehicle pneumatic tyre according to Claim 4, **characterized in that** the textile cord of the reinforcing ply (1) has the construction 780 dtex x 2, wherein both yarns are composed of the material viscose.

7. Vehicle pneumatic tyre according to Claim 5, **characterized in that** the textile cord of the reinforcing ply (1) has the construction 620 dtex x 2, wherein both yarns are composed of the material viscose.

8. Vehicle pneumatic tyre according to one or more of the preceding Claims 1 to 5, **characterized in that** the textile cord of the reinforcing ply (1) is asymmetrical and has multifilament yarns of differing yarn linear density and preferably has the construction 620 dtex x 1 / 780 dtex x 1 [600 tpm / 550 tpm], wherein the cord is end-twisted in the opposite direction to the yarn twist direction.

9. Vehicle pneumatic tyre according to Claim 7, **characterized in that** the cord (2) of the reinforcing ply (1) has the construction 620 dtex x2 with a diameter (D) of 0.42 mm, wherein the cord is arranged in this reinforcing ply (1) in a density of 200 epdm, and **in that** the reinforcing ply (1) has a strength of approximately 13.2 kN/dm.

10. Vehicle pneumatic tyre according to Claim 6, **characterized in that** the cord (2) of the reinforcing ply (1) has the construction 780 dtex x 2 with a diameter (D) of 0.46 mm, wherein the cord is arranged in this reinforcing ply (1) in a density of 175 epdm, and **in that** the reinforcing ply (1) has a strength of approximately 16.1 kN/dm.

11. Vehicle pneumatic tyre according to one or more of the preceding claims, **characterized in that** the strengthening member of the belt ply is composed of at least one steel filament which has a diameter in a range from 0.26 mm to 0.35 mm.

12. Vehicle pneumatic tyre according to one or more of the preceding claims, **characterized in that** the strengthening member of the belt ply has the construction 1x0.30 mm or 2x0.30 mm and is arranged in a density in a range from 80 to 120 epdm, with preferably the strengthening member of the construction 1x0.30 mm being arranged in the belt ply in a density of 110 epdm, and **in that** its strength is approximately 24 kN/dm, or **in that** the strengthening member of the construction 2x0.30 mm is arranged in the belt ply in a density of 80 epdm, and **in that** its strength is approximately 35 kN/dm.

## Revendications

1. Pneumatique de véhicule, qui présente au moins une nappe de renforcement caoutchoutée (1), qui est une carcasse et/ou une bande de ceinture et/ou un renfort de talon, et une nappe de ceinture composée de supports de résistance caoutchoutés, la nappe de renforcement (1) présentant une pluralité de supports de résistance textiles (2) parallèles et agencés à distance les uns des autres, chaque support de résistance textile (2) étant constitué d'au moins un fil multifilament torsadé en la matière viscose, et la nappe de renforcement (1) satisfaisant à la condition suivante :
(D² / E₀) en mm correspond à une valeur dans une plage de 0,30 mm à 0,45 mm, et la nappe de renforcement (1) présente une résistance de 11 kN/dm < x < 20 kN/dm, la résistance de la nappe de renforcement étant la force de rupture de la nappe de renforcement en kN par dm (décimètre), qui se calcule à partir de la force de rupture des différents supports de résistance multipliée par le nombre de supports de résistance par dm de cette nappe de renforcement, la force de rupture étant déterminée selon ASTM D885M,
où D est le diamètre du support de résistance textile résistant (2) en mm et se situe dans une plage de 0,38 mm à 0,48 mm, et
où E₀ = 100/epdm,
**caractérisé en ce que**
la position de la ceinture satisfait à la condition suivante :
(D² / E₀) en mm correspond à une valeur dans une plage de 0,07 mm à 0,43 mm et **en ce que** la nappe de ceinture présente une résistance de 16,5 kN/dm < X < 55 kN/dm, où D est le diamètre du support de résistance en mm et où E₀ = 100/epdm
et la somme des résistances de la nappe de renforcement (1) avec des supports de résistance textiles et de la nappe de ceinture est ≥ 40 kN/dm.

2. Pneumatique de véhicule selon la revendication 1, **caractérisé en ce que** le support de résistance (2) de la nappe de renforcement (1) est un câblé (2) constitué de deux fils multifilaments en viscose torsadés ensemble et **en ce que** les supports de résistance (2) de la nappe de renforcement (1) sont agencés en une densité dans une plage de 150 epdm à 220 epdm, de préférence dans une plage de 170 epdm à 195 epdm dans cette nappe de renforcement (1).

3. Pneumatique de véhicule selon une ou plusieurs des revendications précédentes, **caractérisé en ce que** le fil multifilament en viscose de la nappe de renforcement (1) présente un degré de cristallinité dans la plage de 15 % à 40 %, de préférence dans la plage de 20 % à 35 %, de manière particulièrement préférée dans la plage de 24 % à 30 % et, après conditionnement dans le climat normalisé selon DIN EN ISO 139-1 : 2005, un titre de fil dans la plage de ≥ 150 dtex à < 1 100 dtex, de préférence dans la plage de ≥ 200 dtex à ≤ 840 dtex, de manière particulièrement préférée dans la plage de ≥ 200 dtex à ≤ 820 dtex.

4. Pneumatique de véhicule selon une ou plusieurs des revendications précédentes, **caractérisé en ce que** la nappe de renforcement (1) satisfait à la condition suivante :
(D² / E₀) en mm correspond à une valeur dans une plage de 0,37 mm à 0,45 mm, et **en ce que** la nappe de renforcement (1) présente une résistance de 16 kN/dm < x < 19 kN/dm,
où D est le diamètre du support de résistance textile (2) en mm et se situe dans une plage de 0,43 mm à 0,48 mm, de préférence dans une plage de 0,45 mm à 0,46 mm et
où E₀ = 100/epdm.

5. Pneumatique de véhicule selon une ou plusieurs des revendications précédentes, **caractérisé en ce que** la nappe de renforcement (1) satisfait à la condition suivante :
(D² / E₀) en mm correspond à une valeur dans une plage de 0,35 mm à 0,45 mm, et **en ce que** la nappe de renforcement (1) présente une résistance de 11 kN/dm < x < 14 kN/dm,
où D est le diamètre du support de résistance textile (2) en mm et se situe dans une plage de 0,40 mm à 0,43 mm, et
où E₀ = 100/epdm.

6. Pneumatique de véhicule selon la revendication 4, **caractérisé en ce que** le câblé textile de la nappe de renforcement (1) présente la construction 780 dtex x 2, les deux fils étant constitués de la matière viscose.

7. Pneumatique de véhicule selon la revendication 5, **caractérisé en ce que** le câblé textile de la nappe de renforcement (1) présente la construction 620 dtex x 2, les deux fils étant constitués de la matière viscose.

8. Pneumatique de véhicule selon une ou plusieurs des revendications 1 à 5 précédentes, **caractérisé en ce que** le câblé textile de la nappe de renforcement (1) est asymétrique et présente des fils multifilaments de titres de fil différents et présente de préférence la construction 620 dtex x 1 / 780 dtex x 1 [600 tpm / 550 tpm], le câblé étant torsadé à l'extrémité dans le sens inverse de la direction de torsion du fil.

9. Pneumatique de véhicule selon la revendication 7, **caractérisé en ce que** le câblé (2) de la nappe de renforcement (1) présente la construction 620 dtex x 2 avec un diamètre (D) de 0,42 mm, le câblé étant agencé en une densité de 200 epdm dans cette nappe de renforcement (1) et **en ce que** la nappe de renforcement (1) présente une résistance d'environ 13,2 kN/dm.

10. Pneumatique de véhicule selon la revendication 6, **caractérisé en ce que** le câblé (2) de la nappe de renforcement (1) présente la construction 780 dtex x 2 avec un diamètre (D) de 0,46 mm, le câblé étant agencé en une densité de 175 epdm dans cette nappe de renforcement (1) et **en ce que** la nappe de renforcement (1) présente une résistance d'environ 16,1 kN/dm.

11. Pneumatique de véhicule selon une ou plusieurs des revendications précédentes, **caractérisé en ce que** le support de résistance de la nappe de ceinture est constitué d'au moins un filament d'acier présentant un diamètre dans une plage de 0,26 mm à 0,35 mm.

12. Pneumatique de véhicule selon une ou plusieurs des revendications précédentes, **caractérisé en ce que** le support de résistance de la nappe de ceinture présente la construction 1 x 0,30 mm ou 2 x 0,30 mm et est agencé en une densité dans une plage de 80 à 120 epdm, de préférence le support de résistance de la construction 1 x 0, 30 mm est agencé en une densité de 110 epdm dans la nappe de ceinture et **en ce que** sa résistance est d'environ 24 kN/dm ou **en ce que** le support de résistance de la construction 2 x 0,30 mm est agencé en une densité de 80 epdm dans la nappe de ceinture et **en ce que** sa résistance est d'environ 35 kN/dm.
